# EUROPEAN PATENT APPLICATION

(11) **EP 4 742 057 A1**
(43) Date of publication of application: **13.05.2026**
(21) Application number: 24838750.8
(22) Date of filing: 05.07.2024
(51) Int. Cl.: G06F 16/2453

(54) **DDL STATEMENT CONVERSION METHOD FOR INCREMENTAL DATA MIGRATION, AND RELATED DEVICE**

(30) Priority: 07.07.2023 CN 202310836403
(71) Applicant: Beijing Oceanbase Technology Co., Ltd., Beijing 100102 (CN)
(72) Inventor: BI, Wei, Hangzhou, Zhejiang 310000 (CN); ZHENG, Longpeng, Hangzhou, Zhejiang 310000 (CN); XU, Jing, Hangzhou, Zhejiang 310000 (CN)
(74) Representative: Winter, Brandl - Partnerschaft mbB
(86) International application number: PCT/CN2024/104063
(87) International publication number: WO 2025/011497

(57) **Abstract**

This specification provides a method for transforming DDL statements in incremental data migration and a related device. The method includes: in response to triggering an incremental data migration task between a source database and a target database, obtaining a source DDL statement that has been executed in the source database and that complies with syntax rules of the source database; parsing the source DDL statement to obtain operation information that pertains to the source database and that is contained in the source DDL statement, and transforming the operation information into a corresponding structure based on a predefined data format; and transforming the structure into a target DDL statement that complies with syntax rules of the target database, and executing the target DDL statement in the target database.

## Description

### TECHNICAL FIELD

One or more embodiments of this specification relate to the field of data migration technologies, and in particular, to a method for transforming DDL statements in incremental data migration and a related device.

### BACKGROUND

A data definition language (DDL) enables a series of operations on objects in a database, for example, creating data tables, altering data tables, and dropping data tables. Therefore, during incremental data migration between a source database and a target database, DDL statements executed in the source database need to be accurately synchronized to the target database to ensure consistency between the target database and the source database.

However, if the source database and the target database are heterogeneous databases of different database types, syntactic compatibility issues arise during DDL statement synchronization. That is, a DDL statement that can be executed correctly in the source database may fail to be executed correctly in the target database because the DDL statement does not comply with syntax rules of the target database, thereby severely compromising the consistency between the target database and the source database.

### SUMMARY

In view of this, one or more embodiments of this specification provide a method for transforming DDL statements in incremental data migration and a related device.

According to a first aspect, this specification provides a method for transforming DDL statements in incremental data migration. The method includes: in response to triggering an incremental data migration task between a source database and a target database, obtaining a source DDL statement that has been executed in the source database and that complies with syntax rules of the source database; parsing the source DDL statement to obtain operation information that pertains to the source database and that is contained in the source DDL statement, and transforming the operation information into a corresponding structure based on a predefined data format; and transforming the structure into a target DDL statement that complies with the syntax rules of the target database, and executing the target DDL statement in the target database.

According to a second aspect, this specification provides an apparatus for transforming DDL statements in incremental data migration, including: an obtaining unit, configured to: in response to triggering an incremental data migration task between a source database and a target database, obtain a source DDL statement that has been executed in the source database and that complies with syntax rules of the source database; a parsing unit, configured to: parse the source DDL statement to obtain operation information that pertains to the source database and that is contained in the source DDL statement, and transform the operation information into a corresponding structure based on a predefined data format; and a transformation unit, configured to: transform the structure into a target DDL statement that complies with the syntax rules of the target database, and execute the target DDL statement in the target database.

Correspondingly, this specification further provides a computer device, including a memory and a processor, where the memory stores a computer program executable by the processor, and the processor, when executing the computer program, performs the foregoing method for transforming DDL statements in incremental data migration in the first aspect.

Correspondingly, this specification further provides a computer-readable storage medium, having a computer program stored thereon, where the computer program, when executed by a processor, performs the foregoing method for transforming DDL statements in incremental data migration in the first aspect.

In summary, during incremental data migration between a source database and a target database that are heterogeneous, in this application, a source DDL statement that is executed in the source database and that complies with syntax rules of the source database may be first transformed into a generic structure. The structure may describe operation information contained in the source DDL statement based on a predefined data format. A target DDL statement that complies with syntax rules of the target database is then further generated based on the operation information described in the structure, and the target DDL statement is executed in the target database. In this way, an intermediate structure serves as the bridge for syntactic transformation between the source DDL statement and the target DDL statement in this application, so that differences between syntax rules of every source database and target database no longer need to be considered, thereby significantly improving the transformation efficiency of DDL statements between heterogeneous databases and reducing the transformation costs of DDL statements.

### BRIEF DESCRIPTION OF THE DRAWINGS

FIG. 1 is a schematic diagram of a system architecture of incremental data migration according to an exemplary embodiment;
FIG. 2 is a schematic flowchart of a method for transforming DDL statements in incremental data migration according to an exemplary embodiment;
FIG. 3 is a schematic structural diagram of an apparatus for transforming DDL statements in incremental data migration according to an exemplary embodiment; and
FIG. 4 is a schematic structural diagram of a computer device according to an exemplary embodiment.

### DETAILED DESCRIPTION

The exemplary embodiments are described in detail herein, and the examples of the embodiments are represented in the accompanying drawings. In the following description regarding the accompanying drawings, unless otherwise indicated, the same reference numerals in different accompanying drawings represent the same or similar elements. Implementations described in the following exemplary embodiments do not represent all implementations consistent with one or more embodiments of this specification. On the contrary, the implementations are merely examples of apparatuses and methods that are described in the appended claims in detail and that are consistent with some aspects of one or more embodiments of this specification.

It should be noted that in other embodiments, steps of a corresponding method are not necessarily performed in an order shown and described in this specification. In some other embodiments, the method may include more or fewer steps than those described in this specification. In addition, a single step described in this specification may be decomposed into a plurality of steps for description in other embodiments, and a plurality of steps described in this specification may be combined into a single step for description in another embodiment.

It should be noted that "a plurality of" in this application means two or more.

In addition, all user information (including, but not limited to, user equipment information, and user personal information) and data (including, but not limited to, data for analysis, stored data, and displayed data) in this application are information and data that are authorized by users or fully authorized by all parties. The collection, use, and processing of related data must comply with applicable laws, regulations, and standards in relevant countries and regions, and corresponding operational entries are provided for users to choose whether to grant or deny authorization.
(1) A data definition language (DDL) is statements used to perform create, drop, alter, and other operations on objects (for example, data tables, views, and indexes) in databases.

During incremental data migration between a source database and a target database, the target database needs to synchronize specific data content that has changed in the source database, and also needs to synchronize a data table structure (for example, including information such as data types, indexes, and constraints in a table) or the like that has changed in the source database. Therefore, during the incremental data migration, DDL statements executed in the source database need to be synchronized to the target database to enable the target database and the source database to execute the same DDL statements, thereby ensuring the consistency between data table structures in the target database and the source database.

In the case of homogeneous migration, that is, the source database and the target database having consistent database types, syntactic compatibility issues do not exist in synchronization of DDL statements in the source database to the target database. It is usually only necessary to perform mapping on information such as a database name and a data table name contained in a DDL statement before the DDL statement can be directly synchronized to the target database for execution.

In the case of heterogeneous migration, that is, the source database and the target database having inconsistent database types, syntactic compatibility issues exist during synchronization of DDL statements in the source database, that is, a DDL statement that can be executed correctly in the source database may fail to be executed correctly in the target database because the DDL statement does not comply with syntax rules of the target database, thereby severely compromising the consistency between the target database and the source database.

Based on this, to ensure smooth DDL statement synchronization in a heterogeneous migration scenario, it is usually necessary to perform a syntactic transformation on a source DDL statement to obtain a target DDL statement that corresponds to the source DDL statement and that complies with the syntax rules of the target database to facilitate execution in the target database. However, in a conventional DDL statement transformation solution, a syntax mapping relationship between a source database and a target database typically needs to be customized in a one-to-one manner, and source DDL statements in the source database are then transformed based on the pre-customized syntax mapping relationship into target DDL statements that comply with syntax rules of the target database, leading to low efficiency and high costs. Every time a database type is newly added, one more corresponding DDL transformation solution needs to be customized. With the increasing variety of database types in incremental data migration, a DDL transformation solution with one-to-one customization incurs great costs and fails to meet actual requirements, posing significant obstacles to deployment.

Based on this, this specification provides a technical solution. During incremental data migration between a source database and a target database that are heterogeneous, a DDL statement executed in the source database may be first transformed into a generic structure, and a target DDL statement that complies with syntax rules of the target database is then generated based on the structure, thereby significantly improving the transformation efficiency of DDL statements between heterogeneous databases and reducing costs.

During implementation, in response to triggering an incremental data migration task between a source database and a target database, in this application, a source DDL statement that has been executed in the source database and that complies with syntax rules of the source database may be obtained. The source DDL statement is then parsed to obtain operation information that pertains to the source database and that is contained in the source DDL statement, and the operation information is transformed into a corresponding structure based on a predefined data format. The source database may then send the structure to the target database connected to the source database. Correspondingly, the target database receives the structure, transforms the structure into a target DDL statement that complies with syntax rules of the target database, and may finally execute the target DDL statement in the target database.

In the foregoing technical solution, during incremental data migration between a source database and a target database that are heterogeneous, in this application, a source DDL statement that is executed in the source database and that complies with syntax rules of the source database may be first transformed into a generic structure. The structure may describe operation information contained in the source DDL statement based on a predefined data format. A target DDL statement that complies with syntax rules of the target database is then further generated based on the operation information described in the structure, and the target DDL statement is executed in the target database. In this way, an intermediate structure serves as the bridge for syntactic transformation between the source DDL statement and the DDL statement in this application, so that differences between syntax rules of every source database and target database no longer need to be considered, thereby significantly improving the transformation efficiency of DDL statements between heterogeneous databases, reducing the transformation costs of DDL statements, and meeting actual requirements of users.

In addition, compared with a solution in which a one-to-one syntax mapping relationship needs to be customized in advance for every source database and target database before transformation of DDL statements can be completed in conventional technical solutions, this application can be conveniently applied to various types of databases, to eventually implement hub-and-spoke DDL statement transformations (various types of source DDL statements → an intermediate structure → various types of target DDL statements), featuring strong extensibility.

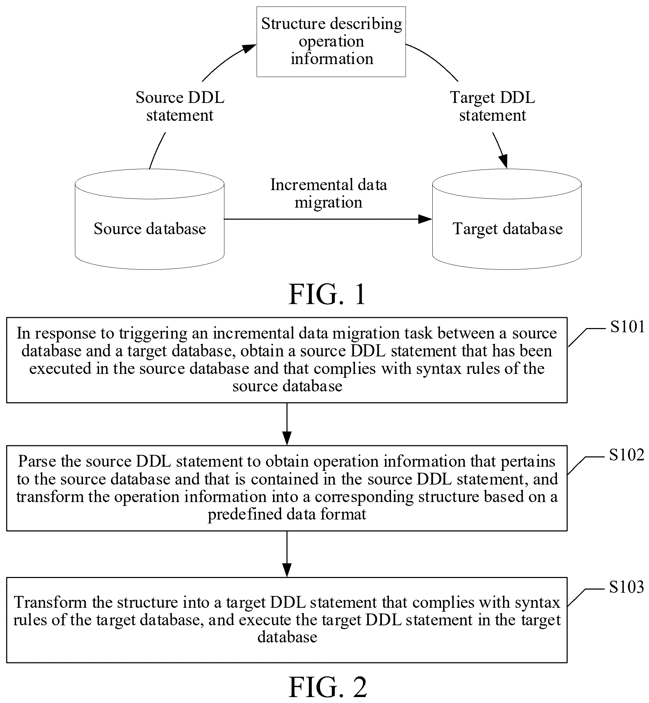

FIG. 1 is a schematic diagram of a system architecture of incremental data migration according to an exemplary embodiment. One or more embodiments provided in this specification may be specifically implemented in the system architecture shown in FIG. 1 or a similar system architecture. As shown in FIG. 1, the system may include a source database and a target database. In a shown implementation, a communication connection may be established between the source database and the target database in a wired or wireless manner. This is not specifically limited in this specification.

In a shown implementation, the source database and the target database may be heterogeneous databases of different database types. Further, the source database may perform data migration to the target database, which may specifically include full data migration and incremental data migration.

In a shown implementation, during incremental data migration from the source database to the target database, source DDL statements that have been executed in the source database need to be synchronized to the target database for execution to ensure consistency between the source database and the target database.

As shown in FIG. 1, during incremental data migration from the source database to the target database, a source DDL statement that has been executed and that complies with syntax rules of the source database may be obtained from the source database.

The syntax rules of the source database may be related to a database type, a version number, and the like of the source database. For example, information such as data types supported by the source database and data table partitions may be specified in the syntax rules. This is not specifically limited in this specification.

The source DDL statement may include operation information that pertains to the source database. In a shown implementation, the operation information may include information about an operation object contained in the source DDL statement, an operation type related to the operation object, and the like. This is not specifically limited in this specification.

For example, the operation object may be a data table, a view, an index, or the like in the source database. This is not specifically limited in this specification. For example, the operation type may be a create operation, a drop operation, an alter operation, or the like. This is not specifically limited in this specification.

Further, as shown in FIG. 1, the source database may transform the source DDL statement that has been executed into a corresponding structure. The structure may be used to describe the operation information contained in the source DDL statement based on a predefined data format.

In a shown implementation, the transformation of the source DDL statement by the source database into the corresponding structure may include: parsing the source DDL statement to obtain the operation information that pertains to the source database and that is contained in the source DDL statement, transforming, based on the predefined data format, the parsed operation information into the corresponding structure, and the like. Details are not described herein again. For details, refer to descriptions in the following embodiments.

Further, as shown in FIG. 1, the source database may send the transformed structure to the target database connected to the source database. Correspondingly, the target database receives the structure.

Further, as shown in FIG. 1, after receiving the structure, the target database may transform the structure into a target DDL statement that complies with syntax rules of the target database, and execute the target DDL statement, to eventually implement DDL statement synchronization in incremental data migration.

In a shown implementation, the transformation of the structure by the target database into the target DDL statement that complies with the syntax rules of the target database may include: parsing the structure to obtain the operation information contained in the structure. If at least partial operation information in the operation information does not comply with the syntax rules of the target database, a syntactic transformation may be performed on the at least partial operation information, the target DDL statement that complies with the syntax rules of the target database is generated based on the syntactically transformed operation information, and the like. Details are not described herein again. For details, refer to descriptions in the following embodiments.

It should be noted that specific types of the source database and the target database are not specifically limited in this specification.

In a shown implementation, the source database and the target database may be relational databases, for example, Oracle databases, mySQL databases, PostgreSQL databases, OceanBase databases, DB2 databases, or the like. This is not specifically limited in this specification.

In a shown implementation, the system architecture in FIG. 1 may further include a data transmission service program connected to the source database and the target database. The data transmission service program may be executed on a computer device (not shown in the figure) independent of the source database and the target database. The data transmission service program may be used to perform incremental data migration between the source database and the target database, and further, may be used to execute the DDL statement transformation, including: obtaining the source DDL statement in the source database, transforming the source DDL statement into the structure, further transforming the structure into the target DDL statement, finally sending the target DDL statement to the target database, and the like. This is not specifically limited in this specification.

In this way, an intermediate structure serves as the bridge for syntactic transformation between the source DDL statement and the DDL statement in this application, so that differences between syntax rules of every source database and target database no longer need to be considered, thereby significantly improving the transformation efficiency of DDL statements between heterogeneous databases and reducing the transformation costs of DDL statements.

FIG. 2 is a schematic flowchart of a method for transforming DDL statements in incremental data migration according to an exemplary embodiment. The method may be applied to the system architecture shown in FIG. 1, may be specifically applied to the source database and the target database in the system architecture shown in FIG. 1, and may be further applied to the data transmission service program independent of the source database and the target database. As shown in FIG. 2, the method may specifically include the following Step S101 to Step S103.

Step S101: In response to triggering an incremental data migration task between the source database and the target database, obtain a source DDL statement that has been executed in the source database and that complies with syntax rules of the source database.

In a shown implementation, the source database may perform incremental data migration to the target database. During the incremental data migration, source DDL statements that have been executed in the source database need to be synchronized to the target database for execution to ensure consistency between the source database and the target database.

Based on this, in response to triggering an incremental data migration task between a source database and a target database, in this application, a source DDL statement that has been executed in the source database may be obtained.

It should be understood that source DDL statements executed in the source database generally all comply with the syntax rules of the source database. The syntax rules of the source database may be related to a database type, a version number, and the like of the source database. For example, information such as data types supported by the source database, data lengths corresponding to the data types, and data table partitions may be specified in the syntax rules. This is not specifically limited in this specification.

It should be noted that a manner of obtaining a source DDL statement is not specially limited in this specification.

In a shown implementation, a source DDL statement that has been executed may be obtained in real time during execution of source DDL statements by the source database in this application. For example, every time one source DDL statement is executed in the source database, the source DDL statement that has been executed is obtained in time.

In a shown implementation, one or more source DDL statements executed within a period of time may alternatively be obtained periodically based on a preset time interval in this application, and the like. This is not specifically limited in this specification.

In a shown implementation, in this application, the source database may obtain a source DDL statement that has been executed, the data transmission service program used to perform incremental data migration may obtain a source DDL statement that has been executed in the source database, or the like. This is not specifically limited in this specification.

Step S102: Parse the source DDL statement to obtain operation information that pertains to the source database and that is contained in the source DDL statement, and transform the operation information into a corresponding structure based on a predefined data format.

In a shown implementation, after obtaining a source DDL statement that has been executed in the source database, the source database may parse the source DDL statement to obtain the operation information that pertains to the source database and that is contained in the source DDL statement.

The operation information may include any possible information related to an operation to be performed by the source DDL statement.

In a shown implementation, the operation information may include information about an operation object contained in the source DDL statement, an operation type related to the operation object, and the like. This is not specifically limited in this specification.

For example, the operation type may be a create operation, a drop operation, an alter operation, or the like. This is not specifically limited in this specification.

For example, the information about the operation object may include a type, an object identifier, attribute information of the operation object, and the like. This is not specifically limited in this specification. The type of the operation object may be a data table, a view, an index, or the like in the source database. This is not specifically limited in this specification. The object identifier of the operation object may be a name of the operation object, for example, a name of a data table, a name of a view, a name of an index, or the like. The attribute information of the operation object may be, for example, a data type, a constraint type, or a partition type in a data table. This is not specifically limited in this specification.

In a shown implementation, taking an example in which the operation object is a data table, the operation information may specifically include a name of the source database, a name of a data table in the source database that a current operation pertains to, information corresponding to a field (TableColumn) in the data table, information corresponding to a constraint (TableConstraint) in the data table, information corresponding to an index (TableIndex) in the data table, information corresponding to a partition (TablePartition) in the data table, information about a comment of the data table, and the like. This is not specifically limited in this specification.

For example, the information corresponding to a field in the data table may include: field names and field types of a plurality of fields contained in the data table, additional attributes (for example, whether the fields are not null, default values, character sets, visibility, and whether it is a generated column) of the fields, and the like. This is not specifically limited in this specification. The field types may include data types of the fields, for example, an integer type, a floating-point type, and a string type. This is not specifically limited in this specification.

For example, the information corresponding to a constraint in the data table may include: a name of the constraint, a constraint type, a set of fields in the data table that are affected by the constraint, and the like. This is not specifically limited in this specification. The constraint type may include a PRIMARY KEY constraint, a NOT NULL constraint, a UNIQUE constraint, a FOREIGN KEY constraint, and the like. This is not specifically limited in this specification.

For example, the information corresponding to an index in the data table may include: a name of the index, an indexes type, a set of fields in the data table that are affected by the index, and whether the index is a prefix index. If the index is a prefix index, the information may further include a length of the prefix index, and the like. This is not specifically limited in this specification.

For example, the information corresponding to a partition in the data table may include: partition types of primary and secondary partitions corresponding to the data table, partition expressions for primary and secondary partitions, quantities of primary and secondary partitions, and slice information (for example, including a slice name, a slice type, a slice expression, and the like) corresponding to each partition, and the like. This is not specifically limited in this specification.

In a shown implementation, taking an example in which the operation object is a data table, based on dynamic DDL operations such as drop table, alter table, truncate table, and create table in this application, corresponding dynamic structures (Event) are defined to represent the dynamic operations.

Further, in this application, after the operation information contained in the source DDL statement is obtained through parsing, the operation information may be transformed into the corresponding structure based on the predefined data format. It should be understood that the structure may describe the operation information based on the predefined data format.

For example, taking an example in which the operation object contained in the source DDL statement is a data table and the operation type is an alter operation, the structure obtained through the transformation based on the source DDL statement may include: a name of a data table to be altered, an alter type of the data table, alter content, and the like. The alter type may include adding or removing columns, adding indexes, dropping indexes, altering field types, and altering field default values, and the like. Further, when the alter type includes adding or removing columns, the alter type may include column information of columns to be added or removed. When the alter type includes adding indexes, the alter type may include an index name and an index type of an index to be added, a set of fields affected by the index, and the like. When the alter type includes dropping indexes, the alter type may include an index name of an index to be dropped. When the alter type includes altering field types, the alter type may include a name of a field to be altered, a type of a new field, and the like. This is not specifically limited in this specification.

For example, taking an example in which the operation object contained in the source DDL statement is a data table and the operation type is a drop operation, the structure obtained through the transformation based on the source DDL statement may include: a name of a data table to be dropped, whether the data table to be dropped is a temporary table, a type of (for example, dropping only a table, or dropping a table and constraints on the table) the drop operation, and the like. This is not specifically limited in this specification.

A possible source DDL statement and a structure obtained through a transformation based on the source DDL statement in this application are described below using a plurality of examples.

### Example 1: Create a data table

For example, taking an example in which a source database is a MySQL database and a source DDL statement is used to create a data table t in the source database, the source DDL statement may be shown as follows:

```
   create table t (
            c1 int not null,
            c2 binary(10),
            c3 varbinary(20),
            c4 bit(1),
            c5 datetime(2) not null,
            c6 char(100) not null default 'aaa',
           primary key (c1),
            unique key (c6)
   ) partition by range(c1) subpartition by hash(c6) (
           partition p1 values less than (0) (subpartition p1_2, subpartition p1_2),
           partition p2 values less than (10) (subpartition p2_1, subpartition p2_2),
           partition p3 values less than (maxvalue) (subpartition p3_1, subpartition p3_2)
   )
```

c1 to c6 may be names of columns in the data table t. Correspondingly, a structure obtained through a transformation based on the source DDL statement may be shown as follows:

```
create table
   TableObject -> objectName = "t"
       -subObjects -> Collection<SchemaObject>
       -- TableColumn -> objectName = c1, type = int isNull = false
       -- TableColumn -> objectName = c2 type = binary(length = 10) isNull = true
       -- TableColumn -> objectName = c3 type = varbinary(length = 20) isNull = true
       -- TableColumn -> objectName = c4 type = bit isNull = true
       -- TableColumn -> objectName = c5 type = datetime (precision = 2) isNull = false
       -- TableColumn -> objectName = c6 type = char (length = 100) isNull = false, default
   = 'aaa'
       -- TableConstraint -> objectName = null, indexType = primary, columnNames = (c1)
       -- TableConstraint -> objectName = null, indexType = unique, columnNames = (c6)
   -extraEvents -> Collection<SchemaObject>
            -- TablePartition -> objectName = null,
           partition Type = range, columnNames = (c1),
            subpartitionType = hash, columnNames = (c6),
                PartitionSlices = Collection(
                -- name = p1, start = null end = '0',
                  subpartitionSlices = Collection(
                    -- name = p1_1,
                    -- name = p1_2)
                -- name = p2, start = null end = '10',
                  subpartitionSlices = Collection(
                    -- name = p2_1,
                    -- name = p2_2)
                -- name = p3, start = null end = 'maxvalue',
                  subpartitionSlices = Collection(
                    -- name = p3_1,
                    -- name = p3_2)
            )
```

### Example 2: Alter a data table

For example, taking an example in which a source database is a MySQL database and a source DDL statement is configured to alter a data table t in the source database, the source DDL statement may be shown as follows:
alter table t modify c decimal(4,0) default null comment 'c comment'

Correspondingly, a structure obtained through a transformation based on the source DDL statement may be shown as follows:

```
   alterTableEvent -> objectName = 't'
       subObjects -> TableColumnObject:
            -- name = 'c',
                -- alterType = columnDataType, alterValue = decimal(4,0),
                -- alterType = default, alterValue = null,
                -- alterType = comment, alterValue = 'c comment'
```

### Example 3: Drop a data table

For example, taking an example in which a source database is a MySQL database and a source DDL statement is configured to drop data tables t1 and t2 in the source database, the source DDL statement may be shown as follows:
drop table if exists t1, t2

Correspondingly, a structure obtained through a transformation based on the source DDL statement may be shown as follows:

```
   DropTableEvent
       -- tableNames = 't1', 't2'
       -- drop option = if exists
```

It should be noted that the foregoing Example 1, Example 2, and Example 3 are only used for description. In some other possible implementations, a specific format of the structure may be different from the formats in the foregoing examples. This is not specifically limited in this specification.

In addition, it should be noted that a specific implementation of parsing the source DDL statement and obtaining the corresponding structure based on the parsed operation information is not specially limited in this specification.

In a shown implementation, the source database may include a pre-built DDL parser matching the syntax rules of the source database and the predefined data format. Correspondingly, the source database may transform, using the DDL parser, the source DDL statement that has been executed into the corresponding structure.

For example, taking an example in which the source database is a mySQL database, a DDL parser in the mySQL database may match syntax rules of the mySQL database and the predefined data format. For example, taking an example in which the source database is a DB2 database, a DDL parser in the DB2 database may match syntax rules of the DB2 database and the predefined data format, and the like. Examples are not enumerated herein again.

In a shown implementation, the DDL parser may be pre-built in the source database before incremental data migration starts in this application. In this way, in response to the triggering of the incremental data migration task, the pre-built DDL parser may obtain the source DDL statement that has been executed, and transform the source DDL statement into the corresponding structure.

In a shown implementation, the DDL parser may alternatively be built in the source database in response to the triggering of the incremental data migration task in this application, so that the source DDL statement that has been executed is obtained using the DDL parser, and the source DDL statement is transformed into the corresponding structure, and the like. This is not specifically limited in this specification.

In addition, in a shown implementation, the DDL parser may alternatively be built in the data transmission service program that is connected to the source database and the target database and that is used to perform incremental data migration, so that the source DDL statement that has been executed in the source database is obtained using the DDL parser in the data transmission service program, and the source DDL statement is transformed into the corresponding structure, and the like. This is not specifically limited in this specification.

In a shown implementation, if source databases connected to the data transmission service program include various database types, DDL parsers corresponding to syntax rules of the source databases of different database types may be built for the source databases in the data transmission service program.

For example, if the source databases connected to the data transmission service program include an Oracle database, a mySQL database, an OceanBase database, a DB2 database, and the like, DDL parsers that correspond to syntax rules of the Oracle database, the mySQL database, the OceanBase database, and the DB2 database respectively may be pre-built in the data transmission service program.

Further, when any one or more source databases start to perform incremental data migration, the data transmission service program may obtain source DDL statements in corresponding source databases respectively using the pre-built DDL parsers corresponding to the any one or more source databases and transform the source DDL statements into structures, and the like. This is not specifically limited in this specification.

Step S103: Transform the structure into a target DDL statement that complies with syntax rules of the target database, and execute the target DDL statement in the target database.

In a shown implementation, after performing the transformation based on the source DDL statement that has been executed to obtain the corresponding structure, the source database may send the transformed structure to the target database. Correspondingly, the target database receives the structure. Alternatively, as described above, if the source DDL statement is transformed into the structure using the data transmission service program, the transformed structure may alternatively be further sent to the target database using the data transmission service program, and the like. This is not specifically limited in this specification.

Further, after receiving the structure corresponding to the source DDL statement, the target database may further transform the structure into the target DDL statement that complies with the syntax rules of the target database, and execute the target DDL statement in the target database, to implement DDL statement synchronization, thereby ensuring consistency between the target database and the source database during incremental data migration.

For example, if the source database is a mySQL database and the target database is a DB2 database, after a source DDL statement that complies with syntax rules of the mySQL database is transformed into a structure in this application, the structure may be further transformed into a target DDL statement that complies with syntax rules of the DB2 database.

In a shown implementation, the transformation of the structure by the target database into the target DDL statement that complies with the syntax rules of the target database may specifically include: parsing the received structure to obtain the operation information described in the structure, and transforming the operation information into the target DDL statement that complies with the syntax rules of the target database.

In a shown implementation, if at least partial operation information in the operation information does not comply with the syntax rules of the target database, the target database may perform a syntactic transformation on the at least partial operation information, and generate, based on the syntactically transformed operation information, the target DDL statement that complies with the syntax rules of the target database.

For example, data types, data lengths, and the like supported by databases of different types may vary. Correspondingly, the syntactic transformation may include a transformation of a data type, a transformation of a data length, and the like. This is not specifically limited in this specification.

In a shown implementation, if at least partial operation information in the operation information does not comply with the syntax rules of the target database, the target database may alternatively directly discard the at least partial operation information, and generate, based on the remaining operation information, the target DDL statement that complies with the syntax rules of the target database, and the like. This is not specifically limited in this specification.

For example, taking the target database being a DB2 database, the source DDL statement shown in the foregoing Example 1, and the corresponding structure as an example, a process of transforming the structure into the target DDL statement may be shown as follows.
1. For create table TableObject-> objectName = "t" in the structure, create table"T" may be directly output, representing creating a data table t.
2. For TableColumn -> objectName = c1, type = int isNull = false in the structure, information contained therein is syntactically compatible with that in the DB2 database. Therefore, c1 INTEGER not null is normally output.
3. For TableColumn -> objectName = c2 type = binary(length = 10) isNull = true in the structure, because the DB2 database does not support the data type binary contained therein, the data type binary may be transformed into CHAR(10) FOR BIT DATA supported by the DB2 database.
4. For TableColumn -> objectName = c3 type = varbinary(length = 20) isNull = true in the structure, because the DB2 database does not support the data type varbinary contained therein, the data type varbinary may be transformed into VARCHAR(10) FOR BIT DATA supported by the DB2 database.
5. For TableColumn -> objectName = c4 type = bit isNull = true in the structure, because the DB2 database does not support the data type bit contained therein, the data type bit may be transformed into CHAR(1) FOR BIT DATA supported by the DB2 database.
6. For TableColumn -> objectName = c5 type = datetime (precision = 2) isNull = false in the structure, because the DB2 database does not support the data type datetime contained therein, the data type datetime may be transformed into TIMESTAMP(2) supported by the DB2 database.
7. For TableColumn -> objectName = c6 type = char (length = 100) isNull = false, default = 'aaa' in the structure, because a maximum length of the data type char therein exceeds a maximum length supported by the DB2 database, the data type char (length=100) may be transformed into VARCHAR(100 CODEUNITS32) supported by the DB2 database.
8. For TableConstraint -> objectName = null, indexType = primary, columnNames = (c1) in the structure, information contained therein is syntactically compatible with that in the DB2 database. Therefore, primary key (c1) is normally output.
9. For TableConstraint -> objectName = null, indexType = unique, columnNames = (c6) in the structure, information contained therein is syntactically compatible with that in the DB2 database. Therefore, CONSTRAINT "GEN_1" UNIQUE (c6) is normally output.
10. For TablePartition in the structure, because data tables in the DB2 database only support primary partitions but does not support secondary partitions, incompatible secondary partitions may be omitted, and only primary partitions are kept. In addition, for every Partition slice, information contained in the Partition slice is compatible with the syntax rules of the DB2 database. Therefore, the information may be normally output according to the syntax rules of the DB2 database.

For example, based on the structure shown in the foregoing Example 1, the eventually transformed target DDL statement may be shown as follows:

```
   create table "T" (
            c1 INTEGER not null,
            c2 CHAR(10) FOR BIT DATA,
            c3 VARCHAR(20) FOR BIT,
            c4 CHAR(1) FOR BIT DATA,
            c5 TIMESTAMP(2) not null,
            c6 VARCHAR(100 CODEUNITS32) not null default 'aaa',
           primary key (c1),
            CONSTRAINT "GEN_1" UNIQUE (c6)
   ) partition by range(c1) subpartition by hash(c6) (
           partition p1 STARTING MINVALUE ENDING 0 EXCLUSIVE,
           partition p2 ENDING 10 EXCLUSIVE,
           partition p3 MAXVALUE EXCLUSIVE
   )
```

For example, taking the target database being a DB2 database, the source DDL statement shown in the foregoing Example 2, and the corresponding structure as an example, a process of transforming the structure into the target DDL statement may be shown as follows.
1. For alterTableEvent -> objectName = 't' in the structure, alter table "t" may be directly output, representing altering a data table t.
2. For TableColumnObject in the structure, operation information contained therein include three attributes to be altered. Because the DB2 database can only support alteration of one attribute for each DDL statement of alter table, the foregoing structure needs to be transformed into three DDL statements of alter table. Each DDL statement is used to translate one alter type.

For example, based on the structure shown in the foregoing Example 2, the eventually transformed target DDL statement may be shown as follows:

```
   ALTER TABLE "t"
       ALTER COLUMN "c" SET DATA TYPE DECIMAL (4,0)
   ALTER TABLE "t"
       ALTER COLUMN "c" SET DEFAULT NULL
   COMMENT ON COLUMN "t"."c" IS 'c comment'
```

For example, taking the target database being a DB2 database, the source DDL statement shown in the foregoing Example 3, and the corresponding structure as an example, a process of transforming the structure into the target DDL statement may be shown as follows.
1. For DropTableEvent in the structure, drop table may be directly output.
2. For tableNames = 't1', 't2' in the structure, two data tables t1 and t2 are contained therein. However, only one table can be dropped for each DDL statement of drop table of the DB2 database. Therefore, the foregoing operation information needs to be transformed into two DDL statements of drop table.
3. For drop option = if exists in the structure, because the DB2 database does not support the drop option, this part of information may be omitted.

For example, based on the structure shown in the foregoing Example 3, the eventually transformed target DDL statement may be shown as follows:

```
   drop table t1
   drop table t2
```

In a shown implementation, similar to the foregoing source database, the target database may also include a pre-built DDL builder matching the syntax rules of the target database and the predefined data format. Correspondingly, the target database may transform the structure using the DDL builder into the target DDL statement that complies with the syntax rules of the target database.

For example, taking an example in which the source database is a DB2 database, a DDL builder in the DB2 database may match syntax rules of the DB2 database and the predefined data format. For example, taking an example in which the source database is an OceanBase database, a DDL builder in the OceanBase database may match syntax rules of the OceanBase database and the predefined data format, and the like. Examples are not enumerated herein again.

In a shown implementation, the DDL builder may be pre-built in the target database before incremental data migration starts in this application. In this way, in response to the triggering of the incremental data migration task, the pre-built DDL builder may transform the received structure into the target DDL statement that complies with the syntax rules of the target database.

In a shown implementation, the DDL builder may alternatively be built in the target database in response to the triggering of the incremental data migration task in this application, so that the received structure is transformed using the DDL builder into the target DDL statement that complies with the syntax rules of the target database, and the like. This is not specifically limited in this specification.

In addition, in a shown implementation, the DDL builder may alternatively be built in the data transmission service program that is connected to the source database and the target database and that is used to perform incremental data migration, so that the structure is transformed using the DDL builder in the data transmission service program into the target DDL statement that complies with the syntax rules of the target database, and the like. This is not specifically limited in this specification.

In a shown implementation, if target databases connected to the data transmission service program include various database types, DDL builders corresponding to syntax rules of the target databases of different database types may be built for the target databases in the data transmission service program.

For example, if the target databases connected to the data transmission service program include an Oracle database, a mySQL database, an OceanBase database, a DB2 database, and the like, DDL builders that correspond to syntax rules of the Oracle database, the mySQL database, the OceanBase database, and the DB2 database respectively may be pre-built in the data transmission service program.

Further, when any one or more target databases start to perform incremental data migration, the data transmission service program may transform the received structure respectively using the pre-built DDL builders that correspond to the any one or more target databases into the target DDL statement that complies with the syntax rules of the target database, and the like. This is not specifically limited in this specification.

As described above, a process of transforming a source DDL statement into a structure and a process of transforming a structure into a target DDL statement are decoupled in this application. In this way, every time one type of source database is newly added, it is only necessary to develop a DDL parser corresponding to the source database of the newly added type, to parse a source DDL statement in the source database of the newly added type into an intermediate generic structure. Similarly, every time one type of target database is newly added, it is also only necessary to develop a DDL builder corresponding to the target database of the newly added type, to transform an intermediate structure into the target DDL statement that complies with the syntax rules of the target database. In this way, hub-and-spoke DDL statement transformations (various types of source DDL statements → an intermediate structure → various types of target DDL statements) can be eventually implemented using the method for transforming DDL statements provided in this application, thereby significantly improving the transformation efficiency of DDL statements between various types of databases, featuring strong extensibility.

In summary, during incremental data migration between a source database and a target database that are heterogeneous, in this application, a source DDL statement that is executed in the source database and that complies with syntax rules of the source database may be first transformed into a generic structure. The structure may describe operation information contained in the source DDL statement based on a predefined data format. A target DDL statement that complies with syntax rules of the target database is then further generated based on the operation information described in the structure, and the target DDL statement is executed in the target database. In this way, an intermediate structure serves as the bridge for syntactic transformation between the source DDL statement and the DDL statement in this application, so that differences between syntax rules of every source database and target database no longer need to be considered, thereby significantly improving the transformation efficiency of DDL statements between heterogeneous databases, reducing the transformation costs of DDL statements, and meeting actual requirements of users. In addition, compared with a solution in which a one-to-one syntax mapping relationship needs to be customized in advance for every source database and target database before transformation of DDL statements can be completed in conventional technical solutions, this application can be conveniently applied to various types of databases, featuring strong extensibility.

In addition, in a shown implementation, the source database and the target database may alternatively be homogeneous databases of the same database type. In a conventional solution, it is usually necessary to monitor and map a database name, a data table name, a view name, and the like contained in a source DDL statement. If a monitoring mechanism (for example, using a regular expression to match a data table name, a view name, and the like in a source DDL statement) is not accurate, mapping errors occur very easily, leading to an error in a DDL statement synchronized into a target database for execution, thereby compromising the consistency between a source database and the target database. Compared with the foregoing conventional solution, through an intermediate transformed structure in this application, an accurate data table name, column name, and the like may be obtained from the structure, to obtain an accurate target DDL statement, thereby ensuring the accuracy of synchronizing DDL statements.

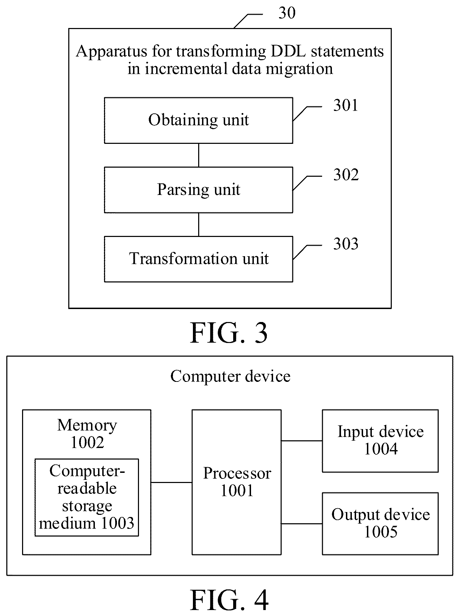

Corresponding to the implementation of the foregoing method procedure, embodiments of this specification further provide an apparatus for transforming DDL statements in incremental data migration. FIG. 3 is a schematic structural diagram of an apparatus for transforming DDL statements in incremental data migration according to an exemplary embodiment. The apparatus 30 may be used for the source database and the target database that perform incremental data migration in the system architecture shown in FIG. 1. As shown in FIG. 3, the apparatus 30 includes: an obtaining unit 301, configured to: in response to triggering an incremental data migration task between a source database and a target database, obtain a source DDL statement that has been executed in the source database and that complies with syntax rules of the source database; a parsing unit 302, configured to: parse the source DDL statement to obtain operation information that pertains to the source database and that is contained in the source DDL statement, and transform the operation information into a corresponding structure based on a predefined data format; and a transformation unit 303, configured to: transform the structure into a target DDL statement that complies with syntax rules of the target database, and execute the target DDL statement in the target database.

In a shown implementation, the transformation unit 303 is further configured to: parse the structure to obtain the operation information contained in the structure; and if at least partial operation information in the operation information does not comply with the syntax rules of the target database, perform a syntactic transformation on the at least partial operation information, and generate, based on the syntactically transformed operation information, the target DDL statement that complies with the syntax rules of the target database.

In a shown implementation, the operation information includes information about an operation object that is contained in the source DDL statement and an operation type related to the operation object.

In a shown implementation, the information about the operation object includes a combination of one or more of the following: a type, an object identifier, and attribute information of the operation object; and the operation type is any one of a drop operation, an alter operation, and a create operation.

In a shown implementation, the attribute information of the operation object includes a data type; and the syntactic transformation includes a data type transformation.

In a shown implementation, the source database includes a pre-built DDL parser matching the syntax rules of the source database and the predefined data format; and the parsing unit 302 is further configured to: parse, using the DDL parser in the source database, the source DDL statement to obtain the operation information that pertains to the source database and that is contained in the source DDL statement, and transform the operation information into the corresponding structure based on the predefined data format.

In a shown implementation, the target database includes a pre-built DDL builder matching the syntax rules of the target database and the predefined data format; and the transformation unit 303 is further configured to transform, using the DDL builder in the target database, the structure into the target DDL statement that complies with the syntax rules of the target database.

In a shown implementation, the source database and the target database are heterogeneous databases of different database types.

For an implementation process of the functions and effects of the units in the apparatus 30, refer to the descriptions in the embodiments corresponding to FIG. 1 and FIG. 2 for details. Details are not described herein again. It should be understood that the foregoing apparatus 30 may be implemented by software, or may be implemented by hardware or a combination of software and hardware. A software implementation is used as an example. An apparatus in a logical sense is formed by reading corresponding computer program instructions into memory by using a processor (CPU) of a device in which the apparatus is located. From the perspective of hardware, in addition to a CPU and a memory, a device in which the foregoing apparatus is located generally further includes other hardware such as a chip configured to receive and transmit a radio signal and/or other hardware such as a card configured to implement a network communication function.

The apparatus embodiments described above are merely examples. The units described as separate parts may or may not be physically separate, and parts displayed as units may or may not be physical modules, and may be located at one position, or may be distributed on a plurality of network modules. Some or all of the units or modules may be selected according to actual requirements to achieve the objectives of the solutions in this specification. A person of ordinary skill in the art can understand and implement the solutions without creative efforts.

The apparatuses, units, and modules described in the foregoing embodiments may be specifically implemented by a computer chip or entity, or by a product with some functionality. An exemplary implementation device is a computer. A specific form of the computer may be a personal computer, a laptop computer, a cellular phone, a camera phone, a smart phone, a personal digital assistant, a media player, a navigation device, an email receiving and sending device, a gaming console, a tablet computer, a wearable device, an in-vehicle computer, or a combination of any several devices in these devices.

Corresponding to the foregoing method embodiments, embodiments of this specification further provide a computer device. FIG. 4 is a schematic structural diagram of a computer device according to an exemplary embodiment. The computer device shown in FIG. 4 may be the source database and the target database in the system architecture shown in FIG. 1 above, or, the computer device may be a device that is connected to the source database and the target database and that can execute a data transmission service program used to perform incremental data migration, and the like. As shown in FIG. 4, the computer device includes a processor 1001 and a memory 1002, and may further include an input device 1004 (for example, a keyboard) and an output device 1005 (for example, a display). The processor 1001, the memory 1002, the input device 1004, and the output device 1005 may be connected by a bus or in another manner. As shown in FIG. 4, the memory 1002 includes a computer-readable storage medium 1003. The computer-readable storage medium 1003 stores a computer program that can be run by the processor 1001. The processor 1001 may be a CPU, a microprocessor, or an integrated circuit configured to control the execution of the foregoing method embodiments. The processor 1001, when running the stored computer program, may perform the steps of the method for transforming DDL statements in incremental data migration in the embodiments of this specification, including: in response to triggering an incremental data migration task between a source database and a target database, obtaining a source DDL statement that has been executed in the source database and that complies with syntax rules of the source database; parsing the source DDL statement to obtain operation information that pertains to the source database and that is contained in the source DDL statement, and transforming the operation information into a corresponding structure based on a predefined data format; transforming the structure into a target DDL statement that complies with syntax rules of the target database, and executing the target DDL statement in the target database; and the like.

For detailed descriptions of steps of the foregoing method for transforming DDL statements in incremental data migration, refer to the foregoing content, and details are not described herein again.

Corresponding to the foregoing method embodiments, embodiments of this specification further provide a computer-readable storage medium. The storage medium has computer programs stored thereon. When the computer programs are run by a processor, the steps of the method for transforming DDL statements in incremental data migration in the embodiments of this specification are performed. For details, refer to the descriptions of the embodiments corresponding to FIG. 1 and FIG. 2, and details are not described herein again.

Described above are merely exemplary embodiments of this specification, and are not intended to limit this specification. Within the spirit and principles of this specification, any modifications, equivalent replacements, improvements, and the like shall fall within the scope of the protection of this specification.

In a typical configuration, the computer device includes one or more CPUs, an input/output interface, a network interface, and memory.

The memory may include a form such as a non-permanent memory, a random access memory (RAM) and/or a non-volatile memory such as a read-only memory (ROM) or a flash memory (flash RAM) in a computer-readable medium. The memory is an example of a computer-readable medium.

Computer-readable media include permanent and non-permanent, removable and nonremovable media, and can implement storage of information by using any method or technology. The information may be computer-readable instructions, data structures, modules of a program, or other data.

Examples of a computer storage medium include but are not limited to a phase-change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette tape, a magnetic tape, a magnetic disk storage or other magnetic storage device, or any other non-transmission medium, which may be configured to store information accessible by a computing device. As defined herein, the computer-readable media do not include transitory computer-readable media, for example, modulated data signals and carriers.

It should be further noted that the terms "include", "comprise", or any variation thereof are intended to cover a non-exclusive inclusion. Therefore, in the context of a process, a method, a commodity, or a device that includes a series of elements, the process, method, commodity, or device not only includes such elements, but also includes other elements not specified expressly, or may include inherent elements of the process, method, commodity, or device. If no more limitations are made, an element limited by "include a/an ..." does not exclude other same elements existing in the process, the method, the commodity, or the device which includes the element.

A person skilled in the art should understand that the embodiments of this specification may be provided as a method, a system, or a computer program product. Therefore, the embodiments of this specification may use a form of hardware only embodiments, software only embodiments, or embodiments with a combination of software and hardware. Moreover, the embodiments of this specification may use a form of a computer program product that is implemented on one or more computer-usable storage media (including but not limited to a disk memory, a CD-ROM, an optical memory, and the like) that include computer usable program code.

## Claims

1. A method for transforming DDL statements in incremental data migration, wherein the method comprises:
in response to triggering an incremental data migration task between a source database and a target database, obtaining a source DDL statement that has been executed in the source database and that complies with syntax rules of the source database;
parsing the source DDL statement to obtain operation information that pertains to the source database and that is contained in the source DDL statement, and transforming the operation information into a corresponding structure based on a predefined data format; and
transforming the structure into a target DDL statement that complies with the syntax rules of the target database, and executing the target DDL statement in the target database.

2. The method according to claim 1, wherein transforming the structure into a target DDL statement that complies with the syntax rules of the target database comprises:
parsing the structure to obtain the operation information contained in the structure; and
upon determining that at least partial operation information in the operation information does not comply with the syntax rules of the target database, performing a syntactic transformation on the at least partial operation information, and generating, based on syntactically transformed operation information, the target DDL statement that complies with the syntax rules of the target database.

3. The method according to claim 2, wherein the operation information comprises information about an operation object that is contained in the source DDL statement and an operation type related to the operation object.

4. The method according to claim 3, wherein the information about the operation object comprises a combination of one or more of the following: a type, an object identifier, and attribute information of the operation object; and the operation type is any one of a drop operation, an alter operation, and a create operation.

5. The method according to claim 4, wherein the attribute information of the operation object comprises a data type; and the syntactic transformation comprises a data type transformation.

6. The method according to claim 1, wherein the source database comprises a pre-built DDL parser matching the syntax rules of the source database and the predefined data format; and
parsing the source DDL statement to obtain operation information that pertains to the source database and that is contained in the source DDL statement, and transforming the operation information into a corresponding structure based on a predefined data format comprises:
parsing, using the DDL parser in the source database, the source DDL statement to obtain the operation information that pertains to the source database and that is contained in the source DDL statement, and transforming the operation information into the corresponding structure based on the predefined data format.

7. The method according to claim 1, wherein the target database comprises a pre-built DDL builder matching the syntax rules of the target database and the predefined data format; and
transforming the structure into a target DDL statement that complies with the syntax rules of the target database comprises:
transforming, using the DDL builder in the target database, the structure into the target DDL statement that complies with the syntax rules of the target database.

8. The method according to any one of claims 1 to 7, wherein the source database and the target database are heterogeneous databases of different database types.

9. An apparatus for transforming DDL statements in incremental data migration, comprising:
an obtaining unit, configured to: in response to triggering an incremental data migration task between a source database and a target database, obtain a source DDL statement that has been executed in the source database and that complies with syntax rules of the source database;
a parsing unit, configured to: parse the source DDL statement to obtain operation information that pertains to the source database and that is contained in the source DDL statement, and transform the operation information into a corresponding structure based on a predefined data format; and
a transformation unit, configured to: transform the structure into a target DDL statement that complies with the syntax rules of the target database, and execute the target DDL statement in the target database.

10. A computer device, comprising a memory and a processor, wherein the memory stores a computer program executable by the processor, and the processor, when executing the computer program, performs the method according to any one of claims 1 to 8.

11. A computer-readable storage medium, having a computer program stored thereon, wherein the computer program, when executed by a processor, implements the method according to any one of claims 1 to 8.
